# EUROPÄISCHE PATENTSCHRIFT

(11) **EP 1 181 123 B1**
(45) Veröffentlichungstag und Bekanntmachung des Hinweises auf die Patenterteilung: **02.04.2003**
(21) Anmeldenummer: 00929463.8
(22) Anmeldetag: 28.04.2000
(51) Int. Cl.: B23B 27/14

(54) **SCHNEIDEINSATZ, INSBESONDERE WENDEPLATTE**
CUTTER INSERT, ESPECIALLY AN INDEXABLE TIP
OUTIL DE COUPE RAPPORTE, NOTAMMENT PLAQUETTE REVERSIBLE

(30) Priorität: 03.05.1999 DE 19920192
(43) Veröffentlichungstag der Anmeldung: 27.02.2002
(73) Patentinhaber: KENNAMETAL INC., Latrobe, PA 15650 (US)
(72) Erfinder: HARTLÖHNER, Rudi, D-90587 Tuchenbach (DE)
(74) Vertreter: Tergau & Pohl Patentanwälte
(86) Internationale Anmeldenummer: EP0003881
(87) Internationale Veröffentlichungsnummer: WO00066302

(56) Entgegenhaltungen:
- DE-A- 2 545 769
- DE-A- 4 134 335
- US-A- 3 815 191
- US-A- 3 975 809
- US-A- 4 214 847
- WERKSTATTSTECHNIK., Bd. 61, Nr. 12, Dezember 1971 (1971-12), Seiten 801-802, XP002145332 SPRINGER VERLAG. BERLIN., DE ISSN: 0340-4544

## Beschreibung

Die Erfindung betrifft einen Schneideinsatz gemäß dem Oberbegriff des Anspruchs 1. Die Grundform üblicher derartiger Schneideinsätze weist zwei gegenüberliegende, zueinander parallele Deckflächen und dazwischen eine polygonale, umlaufende Wand auf. Die Schneiden sind durch die Übergangskanten zwischen der jeweils oben positionierten Deckfläche und den ebenen Bereichen der umlaufenden Wand des Einsatzes gebildet. Zwei in einem Winkel aneinanderstoßende Übergangskanten bilden an ihrem Übergang eine abgerundete Schneidspitze. Die Schneideinsätze weisen somit eine im Wesentlichen dreieckige, quadratische, rhombische oder anderweitig polygonale Umrissform auf. Dadurch ist es möglich, die Schneideinsätze mit mehreren an einem Halter nacheinander in Einsatzstellung bringbaren Schneiden bzw. Schneidspitzen auszustatten. Solche Schneideinsätze werden als Wendeplatten bezeichnet. Diese ermöglichen eine bessere Ausnutzung der für den Schneideinsatz benötigten Werkstoffmenge und daraus resultiert eine Kostenersparnis.

Die in Spannstellung am Halter obenliegende, beim Schneidvorgang mit dem Span in Kontakt gelangende Deckfläche enthält bzw. ist die Spanfläche der an sie angrenzenden Schneide. Die Seitenflächen des Schneideinsatzes bilden die Freiflächen der sie in Einsatzstellung zur Zerspanungsseite hin begrenzenden Schneiden. Die Freifläche einer Schneide ist beim Zerspanungsvorgang jeweils mit ihrer Oberfläche dem zu bearbeitenden Werkstück zugewandt. Die spanend bearbeitete Oberfläche des Werkstükkes läuft jeweils an der Freifläche der Hauptschneide oder der Nebenschneide der in spanender Eingriffsstellung befindlichen Schneidspitze des Schneidkörpers in von den Schneiden weggewandter Richtung in einer Winkelstellung entlang, die den Freiwinkel bildet.

Typische derartige Schneideinsätze sind z.B. bekannt aus den US-Patentschriften 4,880,338, 4,335,984, 4,988,242 und 4,215;957.

Die Geometrie der Schneiden derartiger Schneideinsätze wird durch das Bestreben bestimmt, die für die Zerspanungsvorgänge erforderliche Energie zu minimieren. Die Energie wird durch die Geometrie der erzeugten Späne bestimmt und deren Geometrie hängt ab von der Geometrie der Schneideinsätze bzw. ihrer Schneiden. Außerdem sind für die Spanbildung die Schnittgeschwindigkeit, der Vorschub und die Schnittiefe von Bedeutung. Die Spanflächen sind in ihren die Schneiden flankierenden Bereichen häufig ausgemuldet, um den Spanablauf zu steuern und um die Form der ablaufenden, vom Werkstück abgehobenen Späne zu beeinflussen. Die Erfindung befasst sich mit der Formgebung solcher eine Schneide flankierender Spanmulden, die in mindestens eine Spanfläche eines derartigen Schneideinsatzes eingebracht sind.

Aus US-A-3.975.809 ist ein Schneideinsatz mit den Merkmalen des Oberbegriffs des Anspruches 1 bekannt, bei dem die Spanmulde aus im Wesentlichen zwei ebenen, V-förmig unter verschiedenen Neigungswinkeln zueinander positionierten Flächen gebildet ist, die am inneren Ende der Spanmulde in Form von Radien in die Deckflächenebene einmünden. Bei jeder Spanmulde erzeugt nur diese Einmündung an der Deckfläche jeweils eine ovale Bogenkante. Die Ausläufe der V-förmig zueinander geneigten ebenen Flächen der Spanmulde bilden indessen in ihrer Querschnittsform jeweils ein Kreisbogensegment Diese bewirken jedoch eine ungünstige Spankrümmung und das bedeutet eine unvorteilhafte Spanführung.

Durch DE-A-41 34 335 A ist eine Wendeplatte mit löffelartig symmetrisch ausgebildeten Spanmulden bekannt, die indessen keine gezielte Spanlenkung ermöglichen.

Als Erfindungsziel wird angestrebt, dass der von der Schneide abgehobene Span quer zu seiner Ablaufrichtung asymmetrisch konkav, ovalbogenförmig gewölbt wird und dass dieser Span in seiner Längsrichtung, d.h. in Richtung des Spanablaufes, von der Schneidecke wegweisend gewissermaßen aus in Ablaufrichtung aneinandergesetzten Schuppen oder Lamellen besteht. Das erleichtert den Spanbruch und darauf zielt auch die erfindungsgemäße Ausgestaltung des erfindungsgemäßen Schneideinsatzes.

Der Erfindung liegt die Aufgabe zugrunde, den eingangs genannten Schneideinsatz so auszubilden, dass er eine verbesserte Spanabfuhr gewährleistet. Diese Aufgabe wird durch Anspruch 1 gelöst. Der Begriff "oval" ist von dem lateinischen Wort "ovum = Ei" abgeleitet Er bezeichnet eine geschlossene ebene Kurve mit überall positiver Krümmung, die in der Regel vier Scheitelpunkte besitzt. Das Oval ist somit eine Verallgemeinerung der Ellipse (s. Brockhaus-Enzyklopädie in 24 Bd. - 19. Auflage von 1991).

Die erfindungsgemäße Ausgestaltung einer Spanmulde und ihre Zuordnung zur Geometrie des Schneideinsatzes bewirken, dass der Span nicht im Wesentlichen rechtwinklig zur Schneide, insbesondere zur Hauptschneide abläuft, sondern in einem spitzen Winkel von der Schneide weggelenkt wird, dessen Winkelschenkel in von der Schneidspitze weggewandter Richtung divergieren. Die Schneidspitze ist nämlich beim Zerspanungsvorgang der dem Werkstück nächste Teil des Zerspanungswerkzeuges. Wenn die Spanablaufrichtung so beeinflusst wird, dass sie möglichst bereits im Entstehungszeitpunkt des Spanes vom Werkstück wegweist, so wird das Werkstück optimal vor Beschädigungseinwirkungen geschützt. Ein normalerweise auf eine gerade oder symmetrisch gekrümmte Schneidkante aufprallender Span hingegen läuft in etwa einem rechten Winkel zur Schneide von der Schneidkante weg und das wird erfindungsgemäß vermieden. Die dafür ursächliche Schneideinsatzgeometrie beeinflusst auch vorteilhaft die Geschwindigkeit, mit welcher der Span abfließt. Im der Schneidspitze zugewandten, erfindungsgemäß engeren Bereich wird der Spanablauf stärker gehemmt als im der Schneidspitze abgewandten Bereich, in welchem, die Spanmulde breiter ist.

Ob das Querschnittsprofil der Spanmuldenoberfläche jeweils in den Richtungen von Hauptachse und Nebenachse der Ovalform auf ihren der Schneidspitze und der Schneide zugewandten Seiten gegenüber der abgewandten Seiten eine weniger starke Krümmung oder aber eine stärkere Krümmung aufweist hängt im Wesentlichen vom Werkstoff ab. Dabei ist die stärkere Krümmung bei einem harten und die weniger starke Krümmung bei einem weichen Werkstoff besonders zweckmäßig.

Die erfindungsgemäß ausgebildeten Spanmulden können nach weiterer Erfindung in unterschiedlichem Abstand zur zugeordneten Schneide positioniert sein. Unterschiedliche Positionierungen ergeben sich aus den Ansprüchen 3 bis 5.

Vorteilhaft können auch mehrere grundsätzlich derart gestaltete Spanmulden entlang der Schneide wie etwa die Perlen einer Kette aneinandergereiht sein. Sind diese Spanmulden gemäß Anspruch 8 gleich groß und parallel zur Schneidkante angeordnet, so erhält der Span ein wellblechartiges Profil, dessen Wellen asymmetrisch sind und dadurch einen von der Schneidenspitze wegweisenden Ablauf bewirken. Nehmen die Spanmulden gemäß Anspruch 10 mit größer werdendem Abstand von der Schneidenspitze an Größe zu, so bewirkt dies, dass die vorgenannte Auswirkung auf die Spanform deutlich verstärkt wird.

Schließlich beinhaltet Anspruch 11 eine Weiterbildung durch die Anordnung einer zusätzlichen Zentralmulde im Bereich der Schneidspitze.

Die Erfindung wird anhand von in den Figuren beispielsweise dargestellten Schneideinsätzen näher beschrieben. Es zeigen
- Fig. 1: eine Draufsicht auf die Deck- bzw. Spanfläche eines erfindungsgemäß ausgestatteten Schneideinsatzes.
- Fig. 2: eine perspektivische Ansicht des Schneideinsatzes ähnlich Fig. 1.
- Fig. 3: eine Draufsicht analog Fig. 1 u.a. mit zu Zwecken einer Verdeutlichung der Asymmetrie ihrer Ovalform in die Spanmulden eingezeichneten Isohypsen.
- Fig. 4: eine perspektivische Draufsicht auf eine modifizierte Ausführungsform des Schneideinsatzes.
- Fig. 5: einen Längsschnitt entsprechend der Linie V-V in Fig. 4.
- Fig. 6: einen Querschnitt entsprechende der Schnittlinie VI-VI in Fig. 4.
- Fig. 7: eine Darstellung der Schneidspitze des Schneideinsatzes ähnlich Fig. 2 mit einem in einer erfindungsgemäß ausgestalteten Spanmulde geformten Ablaufspan.
- Fig. 8: eine Darstellung analog Fig. 7 mit einer modifizierten Ausführungsform des Schneideinsatzes entsprechend Fig. 4.
- Fig. 9: eine Draufsicht auf einen Schneideinsatz mit aus Gründen der besseren Übersicht nur einer einzigen Spanmulde von erfindungsgemäßer Ausgestaltung.
- Fig. 10: eine Seitenansicht des Schneideinsatzes in Pfeilrichtung X von Fig. 9 mit einer Draufsicht auf die Freifläche der Schneide und lediglich einer Andeutung der von der Freiflächenseite her nicht erkennbaren Spanmulde.
- Fig. 11: eine Draufsicht auf eine modifizierte Ausführungsform nach Fig. 9, bei der die Spanmulde näher an die Schneide herangerückt ist derart, dass sie mit einem mittleren Bereich ihrer der Schneide zugewandten Längsflanke in die Freifläche der Schneide ausläuft.
- Fig. 12: eine Seitenansicht in Pfeilrichtung XII des Schneideinsatzes, d.h. eine Draufsicht auf deren Spanfläche.
- Fig. 13 u. 14: Darstellungen analog den Fig. 9 und 10 bzw. 11 und 12, bei denen die Spanmulde mit ihrer gesamten der Schneide zugewandten Längsflanke in die Freifläche der Schneide ausläuft.
- Fig. 15: eine Draufsicht auf eine modifizierte Ausführungsform von Fig. 9 derart, dass in Längsrichtung der Schneide mehrere, allerdings kleinere Spanmulden nach Art von Perlen einer Perlenkette in Schneidenlängsrichtung aneinandergereiht ist.
- Fig. 16: eine Seitenansicht analog den Seitenansichten in Fig. 10, 12 und 14 mit Draufsicht auf die Freifläche der Schneide in Blickrichtung von Pfeil XVI in Fig. 15.
- Fig. 17: eine Draufsicht auf eine modifizierte Ausführungsform ähnlich Fig. 15, bei der die aneinandergereihten Spanmulden mit einem mittleren Bereich ihrer der Schneide zugewandten Längsflanken in die Freifläche der Schneide auslaufen.
- Fig. 18: eine Draufsicht auf die Spanfläche entsprechend Pfeil XVIII in Fig. 17.
- Fig. 19: eine weitere modifizierte Ausführungsform ähnlich den Fig. 15 und 17 derart, dass die aneinandergereihten Spanmulden mit ihren gesamten, der Schneide zugewandten Längsflanken in die Schneidenfreifläche auslaufen.
- Fig. 20: eine Seitenansicht der Spanfläche in Pfeilrichtung XX von Fig. 19.
- Fig. 21: eine Draufsicht auf eine weiterhin modifizierte Ausführungsform ähnlich Fig. 15 jedoch derart, dass die Größe der aneinandergereihten Spanmulden mit zunehmendem Abstand von der Schneidspitze zunimmt.
- Fig. 22: eine Seitenansicht der Spanfläche entsprechend der Blickrichtung XXII in Fig. 21.
- Fig. 23: eine modifizierte Ausführungsform ähnlich Fig. 21 jedoch derart, dass die aneinandergereihten Spanmulden mit einem mittleren Bereich ihrer der Schneide zugewandten Längsflanken in die Freifläche der Schneide auslaufen.
- Fig. 24: eine Seitenansicht der Freifläche entsprechend Pfeil XXIV in Fig. 23.
- Fig. 25: eine weitere modifizierte Ausführungsform ähnlich den Fig. 21 und 23 insoweit, als die aneinandergereihten, sich mit zunehmendem Abstand von der Schneidspitze vergrößemden Spanmulden mit ihren Längsflanken in die Freifläche der Schneide auslaufen.
- Fig. 26: eine Seitenansicht der Spanfläche in Pfeilrichtung XXVI von Fig. 25.
- Fig. 27: eine perspektivische Darstellung eines Schneideinsatzes analog Fig. 13.
- Fig. 28: eine vergrößerte Darstellung des Bereiches XXVIII in Fig. 27.
- Fig. 29: eine Draufsicht auf den Schneideinsatz gemäß Fig. 27.
- Fig. 30: eine perspektivische Darstellung eines Schneideinsatzes mit jeweils angrenzend an eine Schneidspitze beidseitig zwei die Schneiden flankierenden Spanmulden.
- Fig. 31: eine vergrößerte Darstellung des Bereiches XXXI in Fig. 30.
- Fig. 32: eine Draufsicht auf den Schneideinsatz gemäß Fig. 30.
- Fig. 33: eine perspektivische Darstellung eines Schneideinsatzes analog Fig. 15.
- Fig. 34: eine vergrößerte Detaildarstellung des Bereiches XXXIV gemäß Fig. 33.
- Fig. 35: eine Draufsicht auf die Deckfläche des Schneideinsatzes gemäß Fig. 33.
- Fig. 36: eine perspektivische Draufsicht auf einen Schneideinsatz ähnlich Fig. 19.
- Fig. 37: eine vergrößerte Detaildarstellung des Bereiches XXXVII in Fig. 36.
- Fig. 38: eine Draufsicht auf den Schneideinsatz gemäß Fig. 36.

Der Schneideinsatz weist beidseitig jeweils eine Deckfläche 1 mit rautenförmigem, d.h. rhombischem Umriss auf. Jede Deckfläche 1 enthält zwei Schneidspitzen 2 mit jeweils den Schneiden 3,6, die als Hauptschneide oder als Nebenschneide in Einsatz kommen. Trotz des Vorhandenseins beidseitig jeweils einer gleichgestalteten Deckfläche 1 ist in den Zeichnungsfiguren nur einseitig eine Deckfläche 1 näher dargestellt und mit Bezugszeichen versehen. Die andere, nicht dargestellte Deckfläche ist analog ausgebildet und sie verläuft parallel zur jeweils in Draufsicht dargestellten Deckfläche 1. Der Schneideinsatz ist von einem Durchgangsloch 25 durchsetzt, in welchem ein die Fixierung des Schneideinsatzes an einem Halter bewerkstelligender Spannbolzen einliegt bzw. angreift.

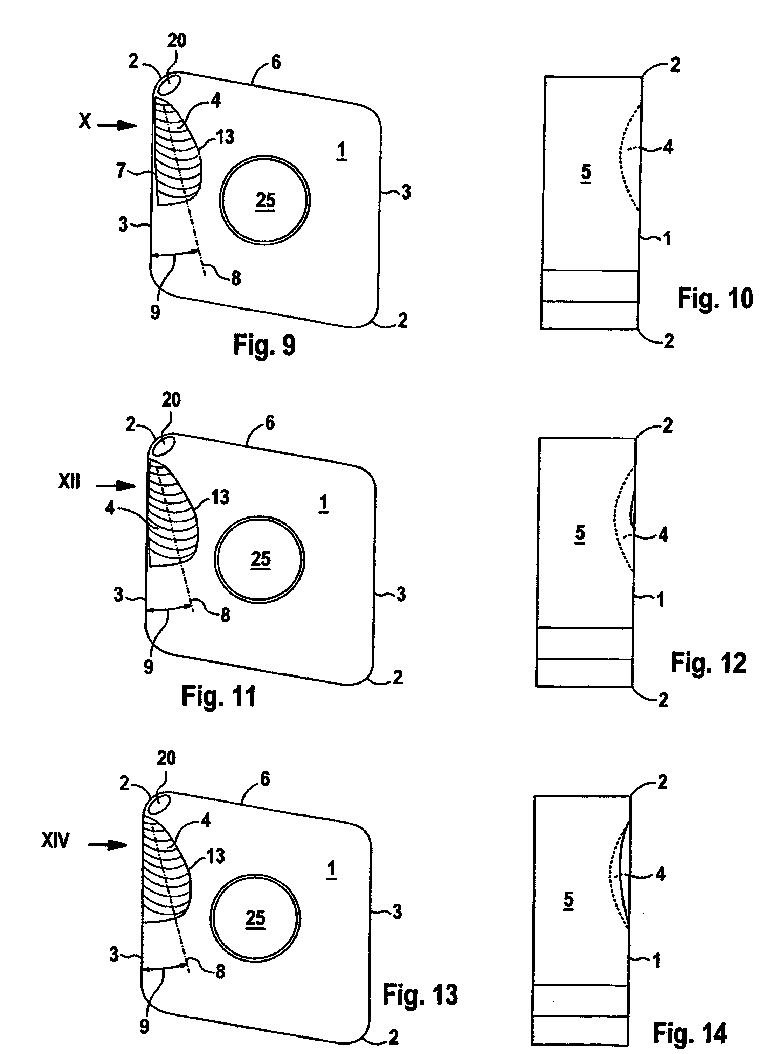

Die hier erfindungswesentliche Spanmulde 4 ist in den Fig. 9 ff der Einfachheit halber nur in Zuordnung zur linken oberen Schneidspitze 2 und zur linken Hauptschneide 3 dargestellt. Ob eine der Schneiden 3,6 die Haupt- oder die Nebenschneide ist, hängt von der Vorschubrichtung des Werkzeuges beim Zerspanungsvorgang ab. Insoweit kann auch umgekehrt die Schneide 6 die Hauptschneide und die Schneide 3 die Nebenschneide sein. In der Beschreibung indessen wird aus Gründen der besseren Unterscheidbarkeit die Schneide 3 als Hauptschneide und die Schneide 6 als Nebenschneide bezeichnet.

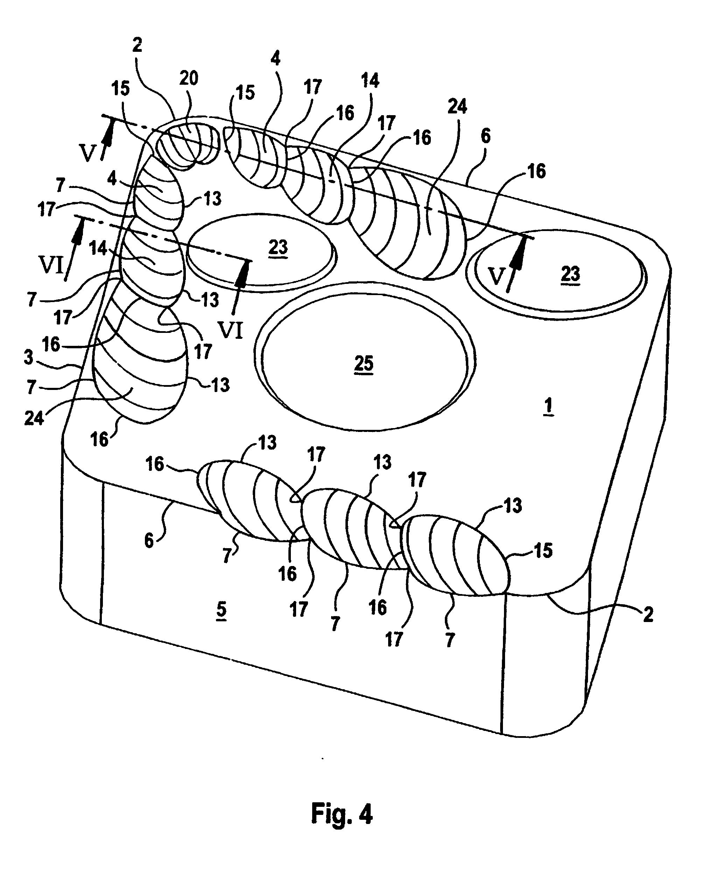

Die Oberfläche und auch die Umrissform der Spanmulde 4 sind ähnlich der Oberfläche und der Umrissform einer asymmetrisch oval ausgemuldeten Schale ausgebildet. Im Falle der Ausführungsformen von Fig. 4 (rechte untere Schneidspitze 2); 11-14; 17-20 und 23-26 ist nur hinsichtlich des der Schneide 3,6 abgewandten Seite der Spanmulde 4 eine vollständig oval ausgemuldete Schale vorhanden. Dort ist nämlich die Spanmulde 4 so nahe an der Schneide 3 bzw. 6 positioniert, dass sie mit ihrer der Schneide 3 bzw. 6 zugewandten, etwa in Richtung der Hauptachse 8 der Spanmulde 4 verlaufenden, schneidenseitigen Langseite 7 mindestens in deren Mittelbereich (Fig. 11,12; 17,18; 23,24) oder sogar vollständig (Fig. 4; 13,14; 19,20 und 25,26) in die Schneide 3,6 bzw. in die unterhalb der Schneide 3,6 befindliche Freifläche 5 übergeht bzw. ausläuft.

Zur Beschreibung der Form einer Spanmulde 4, 14, 24, 34 wird weitgehend der Begriff "Oval" verwendet. Gemäß Brockhaus-Enzyklopädie, 19. Auflage ist ein Oval eine geschlossene ebene Kurve mit überall positiver Krümmung, die vier oder mehr Scheitelpunkte besitzt Das Oval ist somit eine Verallgemeinerung der Ellipse.

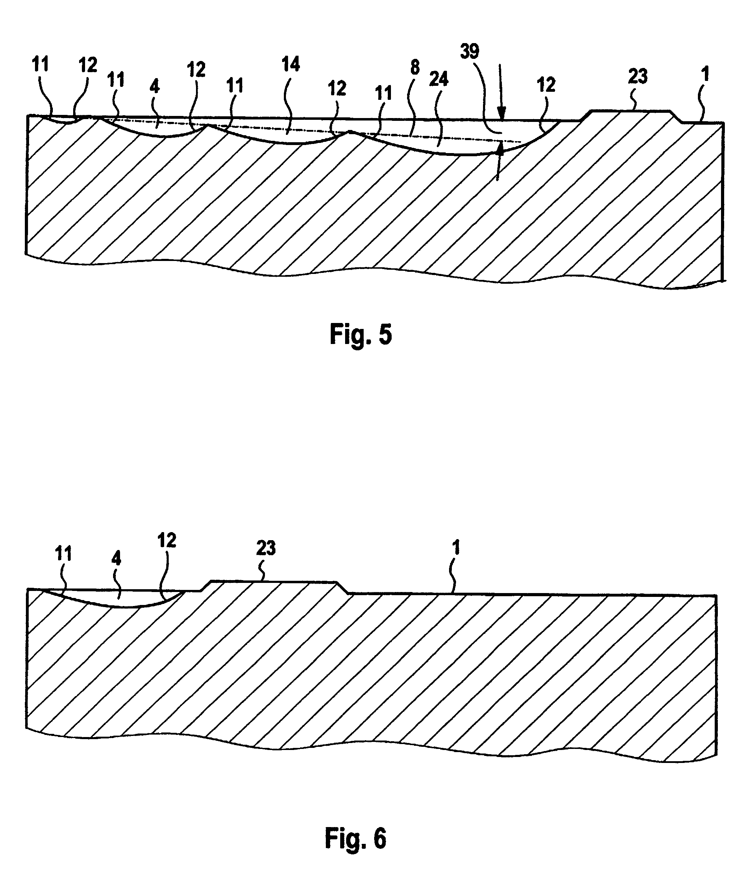

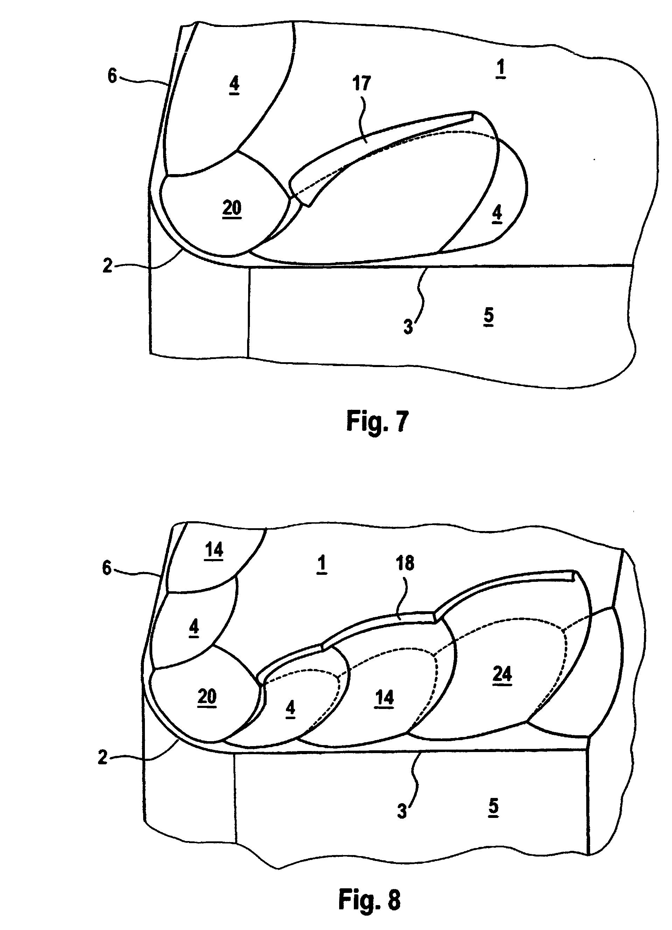

Die Hauptachse 8 der ovalen Umrissform der Spanmulde 4 verläuft im Wesentlichen parallel zu einer der Schneiden 3,6. "Im Wesentlichen" bedeutet hier keine exakte Parallelität. Vielmehr kann die Richtung der Hauptachse 8 des Ovals der Umrissform der Spanmulde 4 mit der Schneide 3,6 einen spitzen Winkel 9 von bis etwa 20° einschließen. Das Querschnittsprofil der Oberfläche der Spanmulde 4 sowohl in Richtung der Hauptachse 8 als auch der Nebenachse 10 der Ovalform weist auf der der Schneidspitze 2 bzw. auf der der Schneide 3 bzw. 6 zugewandten Seite 11 eine weniger starke Krümmung auf als auf den anderen, der Schneidspitze 2 und der Schneide 3,6 abgewandten Seite 12 (Fig. 5,6).

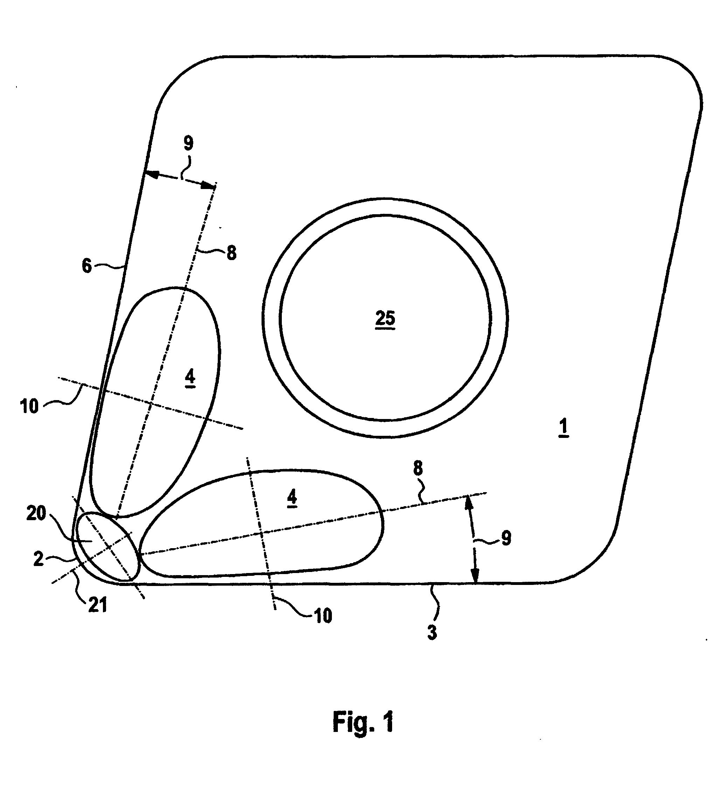

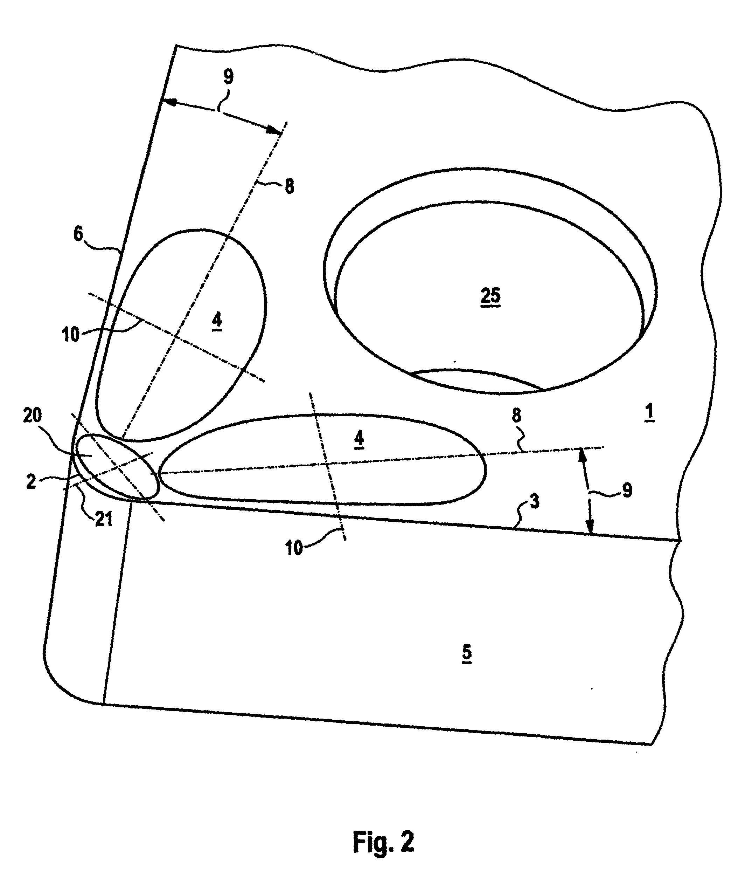

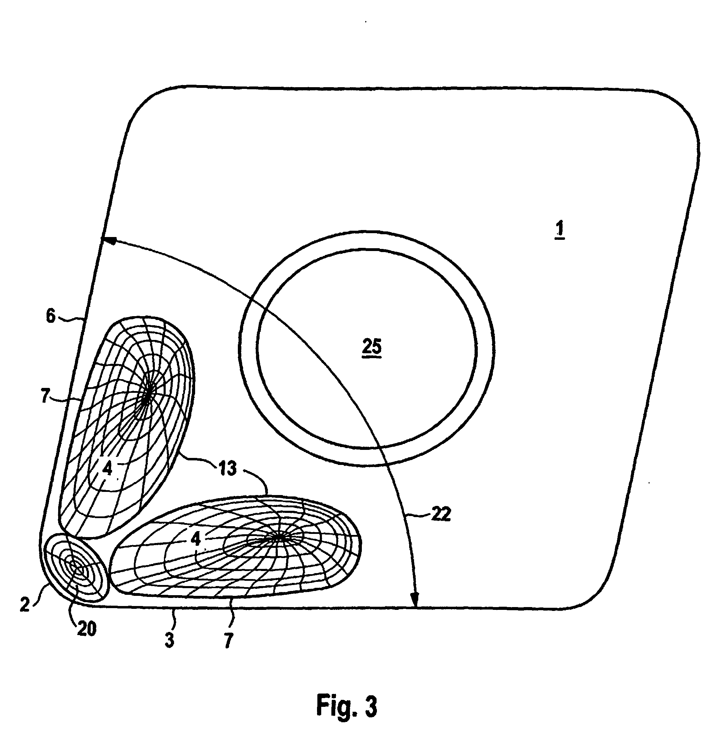

Die Ovalbogenform ist asymmetrisch mit der Folge, dass auch die in der mit der Deckfläche 1 identischen Spanfläche ausgebildete Umrissform der Spanmulde 4 asymmetrisch ist. Es ist nämlich die der benachbarten Schneide 3,6 zugewandte, also die schneidenseitige Langseite 7 des Ovals weniger stark gekrümmt ist a!s die der flankierenden Schneide 3,6 abgewandte, also die schneidenfeme Langseite 13. Bei der Ausführungsform nach den Fig. 1-3;4 (linke obere Schneidspitze 2); 7-10; 15-16 sowie 21 und 22 ist die Spanmulde 4 mit ihrer asymmetrisch ovalen Umrissform vollständig in der Spanfläche 1 der Schneide 3,6 vertieft. Bei der Ausführungsform nach den Fig. 11,12; 17,18 und 23,24 läuft die Spanmulde 4 mit einem mittleren Bereich ihrer schneidenseitigen Langseite 7 in die Freifläche 5 der Schneide 3,6 aus. Bei der Ausführungsform nach Fig. 4 (rechte untere Spitze 2); 13,14; 19,20 und 25,26 läuft die Spanmulde 4 mit ihrer gesamten, der Schneide 3 zugewandten Längsflanke in die Freifläche 5 der Schneide 3,6 aus. Das beruht darauf, dass die Spanmulde 4 bei dieser Ausführungsform der Freifläche 5 besonders nahe positioniert ist.

Bei den Ausführungsformen nach Fig. 4 und 15-26 sind entlang einer jeden Schneide 3,6 mehrere asymmetrisch ovale Spanmulden 4,14,24,34 pp. etwa in Richtung der Hauptachse 8 ihrer Ovalform aneinandergereiht. In Aneinanderreihung benachbarte Schneidmulden 4 gehen ineinander derart über, dass die Langseiten 7,13 der ovalen Umrissform benachbarter Schneidmulden 4,14,24,34 unter Wegfall der Schmalseiten 15,16 ihrer ovalen Umrissform (Fig. 4) und unter dadurch bewirkter Bildung eines stumpfwinkligen Zwickels 17 unmittelbar zusammenlaufen bzw. ineinander übergehen.

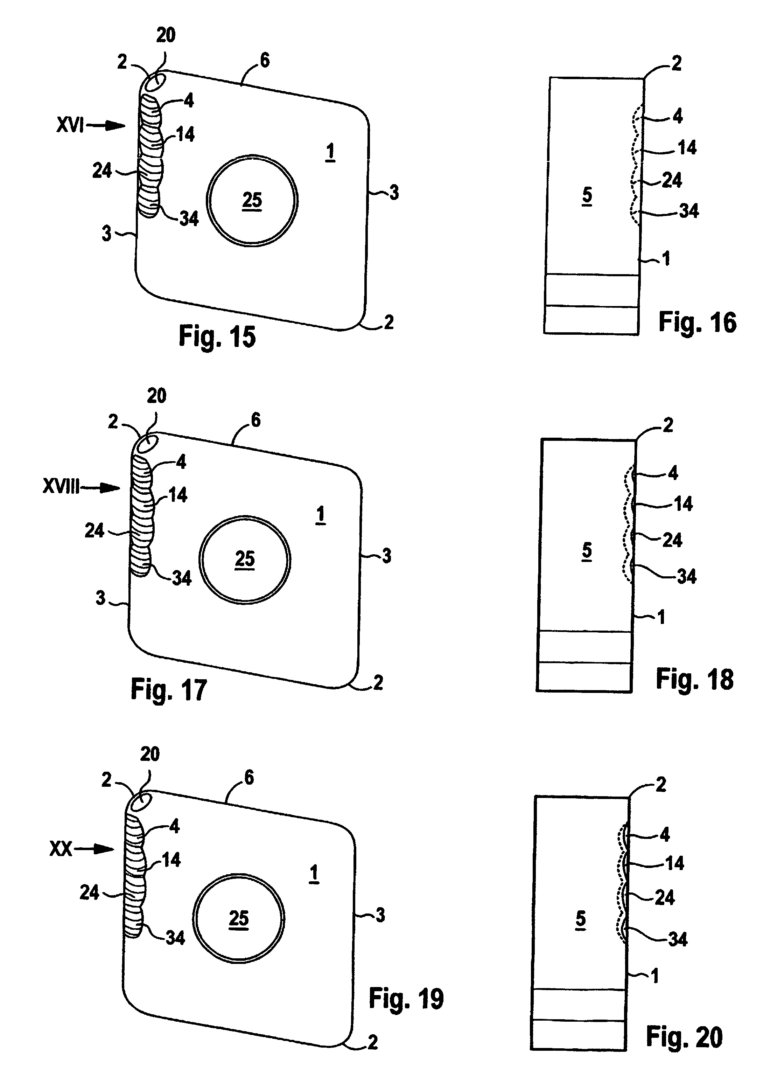

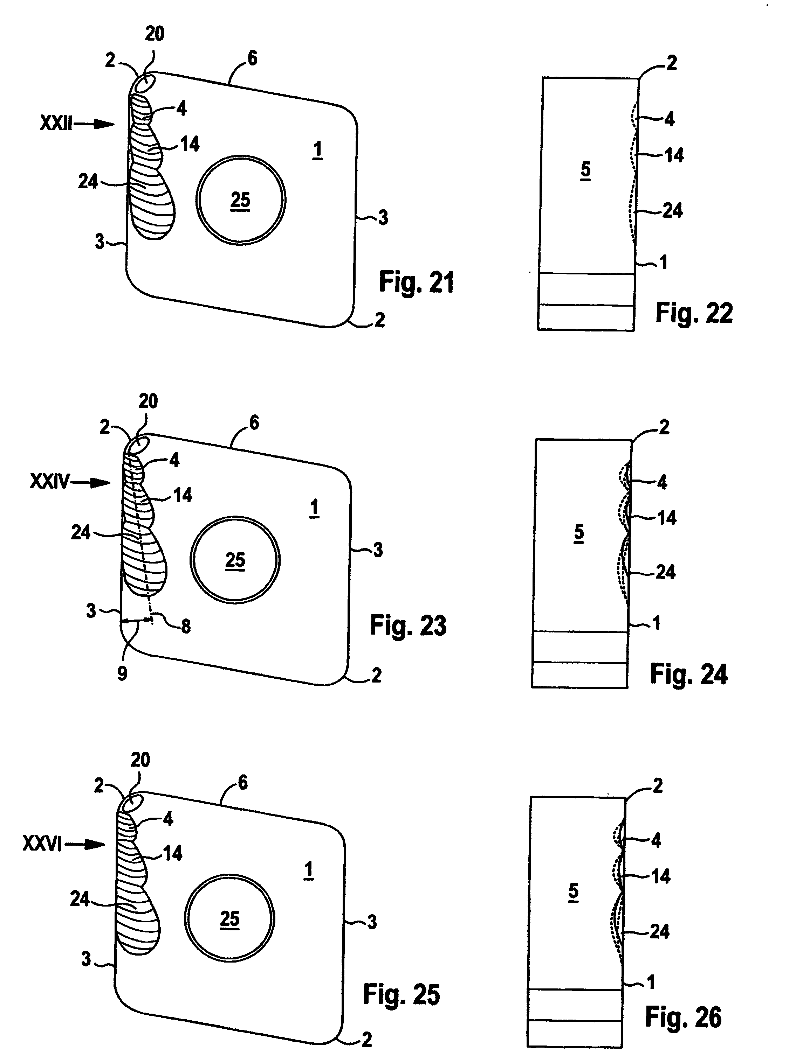

Bei den Ausführungsformen nach Fig. 15-20 sind die Spanmulden 4,14,24,34 gleich groß. Sie sind im Wesentlichen in Längsrichtung der sie flankierenden Schneide 3,6 aneinandergereiht. Bei der Ausführungsform nach Fig. 4, linke obere Schneidspitze 2 sowie Fig. 21-26 nimmt die Größe der aneinandergereihten Spanmulden 4,14,24,34 mit zunehmendem Abstand von der zugeordneten Schneidspitze zu.

Die in den Spanmulden 4,14,24 gebildeten Spanformen 17,18 sind in den Fig. 7 bzw. 8 dargestellt.

Im Zwischenraum zwischen der jeweiligen Schneidspitze 2 und den ihre beiden Schneiden 3,6 flankierenden Spanmulden 4 ist eine ovalschalenartige Zentralmulde 20 mit symmetrisch ovalbogenmäßiger Umrissform in die Spanfläche 1 eingelassen. Dabei bildet die Nebenachse 21 der Ovalform (Fig. 1) die Winkelhalbierende des von den beiden Schneiden 3,6 gebildeten Winkels.

Die beidseitigen Deckflächen 1 des Schneideinsatzes können in ihrem zwischen den Spanmulden 4,14,24,34 befindlichen Innenbereich Auflageelemente 23 tragen, deren ebene Deckflächen parallel zu den Deckflächen 1 des Schneideinsatzes verlaufen und über das Höhenniveau der Deckflächen 1 hinausstehen. Auch ist ein einseitiger Schneideinsatz möglich.

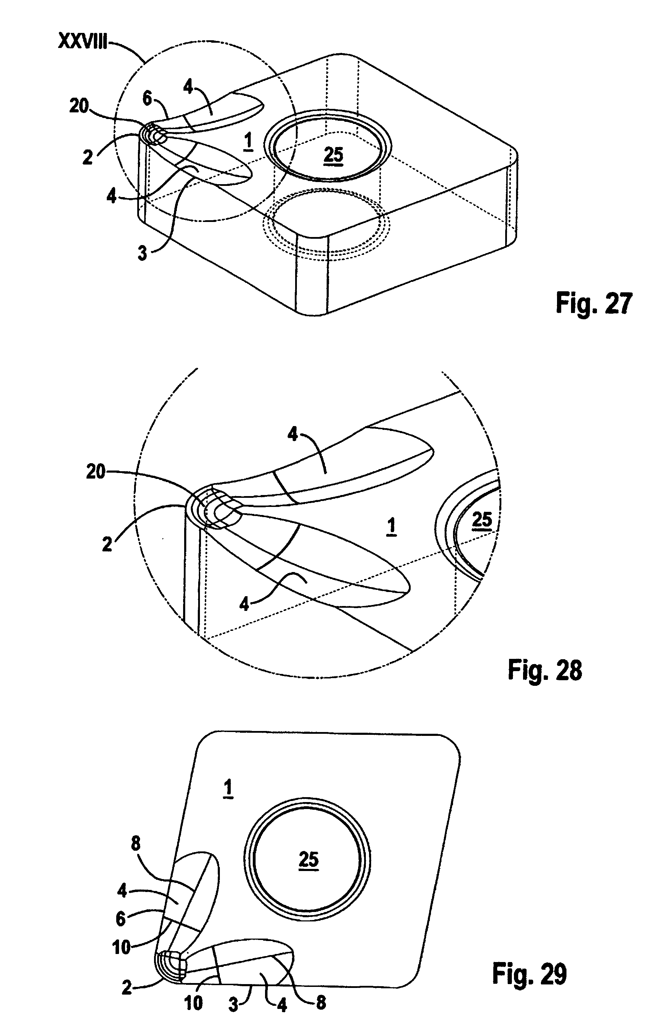

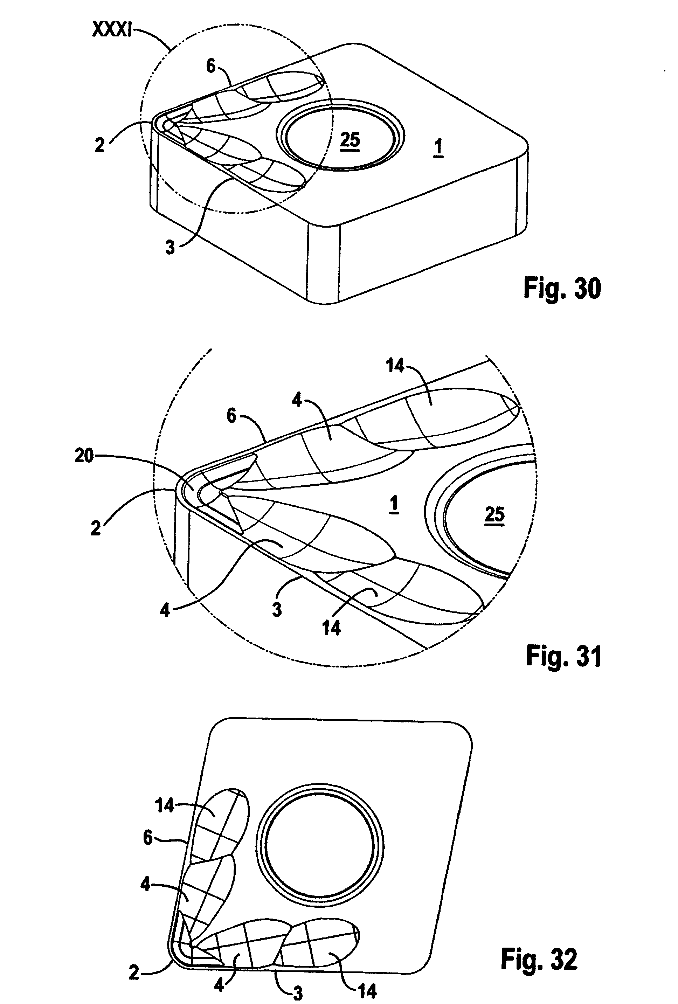

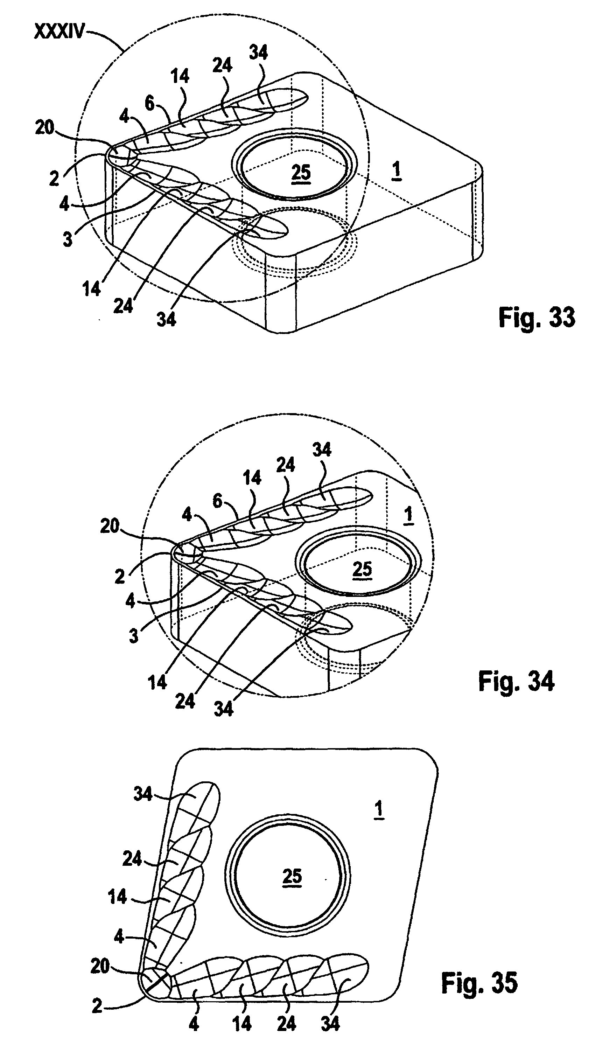

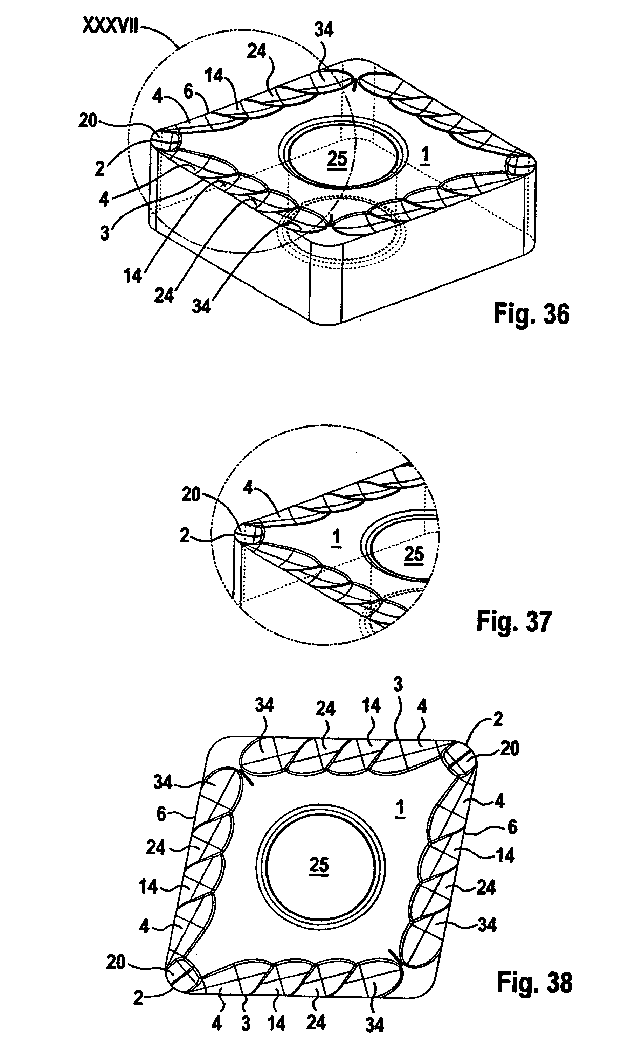

Die Zentralmulde 20 ist in den Ausführungsformen gemäß Fig. 1 bis 4 als von den Spanmulden 4 diskretes, isoliertes Element ausgeführt. Das ist z.B. auch bei den Ausführungsformen gemäß Fig. 9 bis 26 der Fall. Bei den in Fig. 7 und 8 dargestellten Ausführungsformen hingegen geht die Zentralmulde 20 in die benachbarten Spanmulden 4 mehr oder weniger fließend über. Das ist auch bei den in den Fig. 27 bis 38 dargestellten Ausführungsformen der Fall.

### Bezugszeichenliste

- 1: Deckfläche
- 2: Schneidspitze
- 3: Hauptschneide
- 4: Spanmulde
- 5: Freifläche
- 6: Nebenschneide
- 7: schneidenseitige Langseite
- 8: Hauptachse
- 9: spitzer Winkel
- 10: Nebenachse
- 11: zugewandte Seite
- 12: abgewandte Seite
- 13: schneidenfeme Langseite
- 14: Spanmulde
- 15: Schmalseite
- 16: Schmalseite
- 17: Span
- 18: Span
- 20: Zentralmulde
- 21: Nebenachse
- 22: Schneidspitzenwinkel
- 23: Auflageelement
- 24: Spanmulde
- 25: Durchgangsloch

- 34: Spanmulde
- 39: spitzer Winkel

## Patentansprüche

1. Schneideinsatz, insbesondere Wendeplatte für die spanabhebende Bearbeitung von metallischen Werkstücken
mit mindestens einer Schneide (3,6) und mindestens einer die Schneide (3,6) flankierenden, in die Spanfläche (1) eingelassenen Spanmulde (4) zur Formung des entstehenden und Führung des vom Werkstück abgetrennten, ablaufenden Spanes, wobei die Oberfläche der Spanmulde (4) asymmetrisch ausgemuldet ist,
**gekennzeichnet durch**
ein ellipsenbogenähnlich ovalbogenförmiges Querschnittsprofil der Ausmuldung, bei der die Asymmetrie des Querschnittsprofils daraus resultiert, dass der Profilquerschnitt in Richtung von Hauptachse (8) und Nebenachse (10) der Spanmulde (4) auf seiner der Schneidspitze (2) und der Schneide (3,6) zugewandten Seite weniger stark gekrümmt ist als auf seiner der Schneidspitze (2) und der Schneide (3,6) abgewandten Seite.

2. Schneideinsatz nach Anspruch 1,
**dadurch gekennzeichnet,**
**dass** die Hauptachse (8) der asymmetrisch ovalbogenförmig ausgekehlten Spanmulde (4) im Wesentlichen die Schneide (3,6) flankiert, insbesondere einen zur Schneidspitze (2) hin konvergierenden spitzen Winkel (9,39) von 1° bis 20° mit den Schneiden (3,6) bzw. mit der zwischen ihnen aufgespannten Deckfläche (1) einschließt.

3. Schneideinsatz nach Anspruch 1 oder 2,
**dadurch gekennzeichnet,**
**dass** die Spanmulde (4) mit asymmetrisch oval ausgekehlter Umrissform vollständig in der Spanfläche (1) der Schneide (3,6) vertieft ist

4. Schneideinsatz nach Anspruch 1 oder 2,
**dadurch gekennzeichnet,**
**dass** die Spanmulde (4) mit einem Teil, insbesondere mit einem mittleren Bereich ihrer der Schneide (3,6) zugewandten Längsflanke (7) in die Freifläche (5) der Schneide (3,6) ausläuft.

5. Schneideinsatz nach Anspruch 1 oder 2,
**dadurch gekennzeichnet,**
**dass** die Spanmulde (4) mit ihrer gesamten der Schneide (3) zugewandten Längsflanke (7) in die Freifläche (5) der Schneide (3,6) ausläuft.

6. Schneideinsatz nach einem der vorhergehenden Ansprüche,
**dadurch gekennzeichnet,**
**dass** entlang einer jeden Schneide (3,6) mehrere asymmetrisch ovale Spanmulden (4,14,24,34) etwa in Richtung der Hauptachse (8) ihrer Ovalform aneinandergereiht sind.

7. Schneideinsatz nach Anspruch 6,
**dadurch gekennzeichnet,**
**dass** in Aneinanderreihung benachbarte Schneidmulden (4) ineinander übergehen derart, dass die Langseiten (7,13) der ovalen Umrissform benachbarter Schneidmulden (4,14,24,34) unter Wegfall der Schmalseiten (15,16) ihrer ovalen Umrissform und unter dadurch bewirkter Bildung jeweils eines stumpfwinkligen Zwickels (17) unmittelbar ineinander übergehen.

8. Schneideinsatz nach Anspruch 6 oder 7,
**dadurch gekennzeichnet,**
**dass** die Spanmulden (4,14,24,34) etwa gleich groß sind.

9. Schneideinsatz nach einem der Ansprüche 6 bis 8,
**dadurch gekennzeichnet,**
**dass** die Spanmulden (4,14,24,34) im Wesentlichen in Längsrichtung einer sie flankierenden Schneide (3,6) aneinandergereiht sind.

10. Schneideinsatz nach einem der Ansprüche 6,7 oder 9,
**dadurch gekennzeichnet,**
**dass** die Größe der aneinandergereihten Spanmulden (4,14,24,34) mit zunehmendem Abstand von der Schneidspitze (2) zunimmt.

11. Schneideinsatz nach einem der vorhergehenden Ansprüche,
**dadurch gekennzeichnet,**
**dass** im Zwischenraum zwischen der Schneidspitze (2) und den nächstliegenden, ihre beiden Schneiden (3,6) flankierenden Spanmulden (4) eine Zentralmulde (20) in die Spanfläche (1) eingelassen ist.

12. Schneideinsatz nach einem der vorhergehenden Ansprüche,
**dadurch gekennzeichnet,**
**dass** seine beidseitigen Deckflächen (1) in ihrem zwischen den Spanmulden (4,14,24,34) befindlichen Innenbereich über die jeweilige Deckfläche (1) hinausstehende Auflageelemente (23) tragen.

## Revendications

1. Insert de coupe, en particulier plaquette réversible pour l'usinage par enlèvement de matière de pièces à oeuvrer métalliques, comportant au moins un tranchant (3, 6) et au moins une cavité à copeaux (4) flanquant le tranchant (3, 6) et ménagée dans la surface de coupe (1) pour former le copeau en train de se produire et le guider tandis qu'il est séparé de la pièce à oeuvrer et s'en échappe, la surface de la cavité à copeaux (4) étant creusée de façon asymétrique,
**caractérisé par** un profil de section en forme d'arc ovale à la manière d'un arc ellipsoïde de la cavité dans laquelle l'asymétrie du profil de section résulte du fait que la section de profil est recourbée moins fortement en direction du grand axe (8) et du petit axe (10) de la cavité à copeaux (4) sur son côté tourné vers la pointe de coupe (2) et vers le tranchant (3, 6) que sur son côté détourné de la pointe de coupe (2) et du tranchant (3, 6).

2. Insert de coupe selon la revendication 1, **caractérisé en ce que** le grand axe (8) de la cavité à copeaux (4) creusée de façon asymétrique en forme d'arc ovale flanque essentiellement le tranchant (3, 6) et enferme en particulier un angle aigu (9, 39) de 1° à 20° convergeant vers la pointe de coupe (2), conjointement avec les tranchants (3, 6) ou avec la surface de couverture (1) définie entre ceux-ci.

3. Insert de coupe selon l'une ou l'autre des revendications 1 et 2, **caractérisé en ce que** la cavité à copeaux (4) est renfoncée avec une forme de contour creusée de façon asymétrique ovale complètement dans la surface de coupe (1) du tranchant (3, 6).

4. Insert de coupe selon l'une ou l'autre des revendications 1 et 2, **caractérisé en ce que** la cavité à copeaux (4) se termine dans la surface libre (5) du tranchant (3, 6) par une partie, en particulier par une zone médiane de son flanc longitudinal (7) tourné vers le tranchant (3, 6).

5. Insert de coupe selon l'une ou l'autre des revendications 1 et 2, **caractérisé en ce que** la cavité à copeaux (4) se termine dans la surface libre (5) du tranchant (3, 6) par la totalité de son flanc longitudinal (7) tourné vers le tranchant (3).

6. Insert de coupe selon l'une des revendications précédentes, **caractérisé en ce que** le long de chaque tranchant (3, 6), plusieurs cavités à copeaux (4, 14, 24, 34) ovales asymétriques sont prévues en rangée les unes à côté des autres approximativement en direction du grand axe (8) de leur forme ovale.

7. Insert de coupe selon la revendication 6, **caractérisé en ce que** des cavités à copeaux (4) voisines en rangée passent les unes dans les autres, de telle sorte que les grands côtés (7, 13) de la forme de contour ovale de cavités à copeaux voisines (4, 14, 24, 34) passent directement les uns dans les autres avec omission des petits côtés (15, 16) de leur forme de contour ovale et avec formation résultante d'un gousset respectif (17) à angle obtus.

8. Insert de coupe selon l'une ou l'autre des revendications 6 et 7, **caractérisé en ce que** les cavités à copeaux (4, 14, 24, 34) ont approximativement la même taille.

9. Insert de coupe selon l'une des revendications 6 à 8, **caractérisé en ce que** les cavités à copeaux (4, 14, 24, 34) sont mises en rangée essentiellement en direction longitudinale d'un tranchant (3, 6) qui les flanque.

10. Insert de coupe selon l'une des revendications 6, 7 ou 9, **caractérisé en ce que** la taille des cavités à copeaux (4, 14, 24, 34) mises en rangée augmente avec l'augmentation de la distance par rapport à la pointe de coupe (2).

11. Insert de coupe selon l'une des revendications précédentes, **caractérisé en ce que** dans l'intervalle entre la pointe de coupe (2) et les cavités à copeaux (4) les plus proches flanquant ses deux tranchants (3, 6), une cavité centrale (20) est ménagée dans la surface de coupe (1).

12. Insert de coupe selon l'une des revendications précédentes, **caractérisé en ce que** ses surfaces de couverture (1) prévues des deux côtés portent dans leur zone intérieure située entre les cavités à copeaux (4, 14, 24, 34) des éléments d'appui (23) qui dépassent au-delà de la surface de couverture respective (1).

## Claims

1. Cutting insert, especially an indexable tip for machining metallic workpieces, having at least one cutting edge (3, 6) and at least one chip hollow (4) which flanks the cutting edge (3, 6), is sunk in the rake face (1) and is intended for forming the chip produced and for guiding the escaping chip cut off from the workpiece, the surface of the chip hollow (4) being hollowed out asymmetrically, **characterized by** a cross-sectional profile of the hollowed-out portion in the shape of an oval curve similar to an ellipse curve, in which hollowed-out portion the asymmetry of the cross-sectional profile results from the fact that the profile cross section, in the direction of the main axis (8) and the secondary axis (10) of the chip hollow (4), is curved to a less pronounced extent on its side facing the cutting point (2) and the cutting edge (3, 6) than on its side facing away from the cutting point (2) and the cutting edge (3, 6).

2. Cutting insert according to Claim 1, **characterized in that** the main axis (8) of the chip hollow (4) channelled asymmetrically in the shape of an oval curve essentially flanks the cutting edge (3, 6) and encloses, in particular, an acute angle (9, 39), converging towards the cutting point (2), of 1° to 20° with the cutting edges (3, 6) or with the top surface (1) spread between them.

3. Cutting insert according to Claim 1 or 2, **characterized in that** the chip hollow (4), with an outer contour channelled asymmetrically in an oval shape, is recessed completely in the rake face (1) of the cutting edge (3, 6).

4. Cutting insert according to Claim 1 or 2, **characterized in that** the chip hollow (4), with one part, in particular with a centre region of its longitudinal flank (7) which faces the cutting edge (3, 6), runs out into the flank (5) of the cutting edge (3, 6) .

5. Cutting insert according to Claim 1 or 2, **characterized in that** the chip hollow (4), with its entire longitudinal flank (7) which faces the cutting edge (3), runs out into the flank (5) of the cutting edge (3, 6).

6. Cutting insert according to one of the preceding claims, **characterized in that**, along each cutting edge (3, 6), a plurality of asymmetrically oval chip hollows (4, 14, 24, 34) are arranged in a row approximately in the direction of the main axis (8) of their oval shape.

7. Cutting insert according to Claim 6, **characterized in that** cutting hollows (4) adjacent to one another in a row merge into one another in such a way that the longitudinal sides (7, 13) of the oval outer contour of adjacent cutting hollows (4, 14, 24, 34), with the omission of the narrow sides (15, 16) of their oval outer contour and with an obtuse-angled gusset (17) thereby being formed in each case, merge directly into one another.

8. Cutting insert according to Claim 6 or 7, **characterized in that** the chip hollows (4, 14, 24, 34) are approximately the same size.

9. Cutting insert according to one of Claims 6 to 8, **characterized in that** the chip hollows (4, 14, 24, 34) are arranged in a row essentially in the longitudinal direction of a cutting edge (3, 6) flanking them.

10. Cutting insert according to one of Claims 6, 7 or 9, **characterized in that** the size of the chip hollows (4, 14, 24, 34) arranged in a row increases with increasing distance from the cutting point (2).

11. Cutting insert according to one of the preceding claims, **characterized in that** a central hollow (20) is sunk in the rake face (1) in the intermediate space between the cutting point (2) and the nearest chip hollows (4) flanking its two cutting edges (3, 6).

12. Cutting insert according to one of the preceding claims, **characterized in that** its top surfaces (1) on both sides, in their inner region located between the chip hollows (4, 14, 24, 34), have supporting elements (23) projecting above the respective top surface (1).
